# EUROPEAN PATENT APPLICATION

(11) **EP 4 822 473 A1**
(43) Date of publication of application: **14.10.2026**
(21) Application number: 23962631.0
(22) Date of filing: 27.12.2023
(51) Int. Cl.: G05D 1/229, G05D 1/246, G05D 1/622, G05D 107/70, G05D 109/20

(54) **CONTROL METHOD, CONTROL SYSTEM, AIRCRAFT, AND STORAGE MEDIUM**

(71) Applicant: SZ DJI Technology Co., Ltd., Shenzhen, Guangdong 518057 (CN)
(72) Inventor: ZHANG, Jun, Shenzhen, Guangdong 518057 (CN); WANG, Lu, Shenzhen, Guangdong 518057 (CN)
(74) Representative: Goddar, Heinz J.
(86) International application number: PCT/CN2023/142446
(87) International publication number: WO 2025/137946

(57) **Abstract**

The present application relates to the technical field of aircraft, and in particular, to a control method, a control system, an aircraft, and a storage medium. The control method includes: obtaining a target position point(s) of a slender obstacle, where the slender obstacle is located within a flight area of the aircraft; obtaining target data corresponding to the target position point(s); constructing a three-dimensional virtual volume of a space occupied by the slender obstacle based on the target data; generating a flight route for the aircraft within the flight area based on the three-dimensional virtual volume; and controlling the aircraft to fly along the flight route to circumvent the slender obstacle. This control method can improve both the efficiency and safety of the aircraft in circumventing slender obstacles.

## Description

### Technical Field

The present application relates to the technical field of aircraft, and in particular, to a control method, a control system, an aircraft, and a storage medium.

### Background Art

An aircraft can fly at low altitudes, making it prone to approach terrain and spatial obstacles above the terrain. Among these, slender obstacles such as power lines, due to their certain ground-hanging height and lateral hanging width, can easily cause collisions or entanglement with the aircraft. In addition, slender obstacles are difficult to detect and identify because of characteristics such as the small reflective cross-section of the cables and the crisscrossing of the cable paths. The presence of these slender obstacles can seriously affect flight safety. Therefore, improving both the efficiency and safety of navigating around slender obstacles has long been a critical challenge in the industry.

### Summary of the Invention

Based on this, some embodiments of the present application provide a control method, a control system, an aircraft, and a storage medium, aiming to improve the efficiency and safety of circumventing slender obstacles.

In a first aspect, some embodiments of the present application provide a control method, including:
obtaining a target position point of a slender obstacle, where the slender obstacle is located within a flight area of an aircraft;
obtaining target data corresponding to the target position point;
constructing a three-dimensional virtual volume of a space occupied by the slender obstacle based on the target data;
generating a flight route for the aircraft within the flight area according to the three-dimensional virtual volume; and
controlling the aircraft to fly along the flight route to circumvent the slender obstacle.

The control method provided in the first aspect calibrates the target position points of slender obstacles in advance, before the flight route planning of the aircraft. Based on the target data corresponding to the target position points, a three-dimensional virtual volume of the space where the slender obstacles are located is constructed to provide a reference for subsequent flight route planning. By calibrating the positions in advance and dividing the volume beforehand, the control method preempts the problem of circumventing slender obstacles, improving the aircraft's efficiency and safety in circumventing the slender obstacles. At the same time, by constructing the three-dimensional virtual volume, the space occupied by the slender obstacles is utilized as a safe passage area as fully as possible.

In a second aspect, some embodiments of the present application further provide a control method, including:
obtaining a target position point of a slender obstacle, where the slender obstacle is located within a flight area of an aircraft, the target position point including a first position point and a second position point along a length direction of the slender obstacle, and a relative height difference exists between the first position point and the second position point;
obtaining target data corresponding to the target position point; and
constructing, based on the target data, a no-fly zone for a space where the slender obstacle is located, where the no-fly zone is related to a slope of a first virtual connecting line between the first position point and the second position point.

The control method provided in the second aspect, for the case where a relative height difference exists between the target position points of a slender obstacle, constructs a no-fly zone related to the slope of a first virtual connecting line between the first position point and the second position point. This method maximizes the use of the space occupied by the slender obstacle as a safe passage area, particularly making full use of the space beneath the slender obstacle as a safe passage area, thereby reducing or avoiding additional kinetic energy loss caused by large-attitude circumvention.

In a third aspect, some embodiments of the present application further provide a control system, including at least one processor; and at least one memory including computer program code, where at least one of the memories and the computer program code are configured with at least one processor such that the system is at least capable of performing the control method of the first aspect or the second aspect.

In a fourth aspect, some embodiments of the present application further provide an aircraft, including:
a body;
a power system, disposed on the body, configured to provide flight power for the aircraft; and
a control system, disposed on the body, configured to implement the control method of the first aspect or the second aspect.

In a fifth aspect, some embodiments of the present application further provide a storage medium for computer-readable storage, the storage medium storing a computer program, where when the computer program is executed by a processor, the processor implements the control method of the first aspect or the second aspect.

It should be understood that the foregoing general description and the following detailed description are merely exemplary and illustrative, and do not limit the present application.

### Brief Description of the Drawing

To more clearly illustrate the technical solutions of some embodiments of the present application, the drawings used in the description of the embodiments will be briefly introduced below. It is apparent that the drawings described below are some embodiments of the present application. For a person skilled in the art, other drawings can also be obtained based on these drawings without any inventive effort.
FIG. 1 is a schematic diagram of the steps of a control method provided by an embodiment of the present application;
FIG. 2 is a schematic diagram of a three-dimensional virtual volume provided by an embodiment of the present application;
FIG. 3 is another schematic diagram of the three-dimensional virtual volume provided by an embodiment of the present application;
FIG. 4 is yet another schematic diagram of the three-dimensional virtual volume provided by an embodiment of the present application;
FIG. 5 is still another schematic diagram of the three-dimensional virtual volume provided by an embodiment of the present application;
FIG. 6 is a schematic diagram of the steps of another control method provided by an embodiment of the present application;
FIG. 7 is a schematic diagram of a control system provided by an embodiment of the present application; and
FIG. 8 is a schematic diagram of an aircraft provided by an embodiment of the present application.

### Detailed Description

The technical solutions of some embodiments of the present application will be clearly and fully described below with reference to the accompanying drawings. It is apparent that the described embodiments are only part of the embodiments of the present application, not all embodiments. All other embodiments that a person skilled in the art can obtain based on the embodiments of the present application without inventive effort also fall within the scope of the present application.

The flowcharts shown in the drawings are merely illustrative examples and are not required to include all content and operations/steps, nor are they required to be performed in the order described. For example, certain operations/steps can be further divided, combined, or partially merged, so the actual execution order may change according to practical circumstances.

Some embodiments of the present application will be described in detail below with reference to the drawings. In the absence of conflict, the following embodiments and features in the embodiments may be combined with each other.

An aircraft can fly at low altitudes, making it prone to approach terrain and spatial obstacles above the terrain. Among these, slender obstacles such as power lines, due to their certain ground-hanging height and relatively wide span, can easily cause collisions or entanglement with the aircraft. In addition, slender obstacles are difficult to detect and identify because of characteristics such as the small reflective cross-section of the cables and the crisscrossing of cable paths, which can seriously affect flight safety. Detecting and identifying slender obstacles has long been a challenge in the industry. In the existing technology, the handling of slender obstacles mainly falls into two categories: one relies on real-time detection methods using sensors. However, limited by the capability and cost of sensors, in many practical scenarios, this method cannot detect slender obstacles in time and avoid them; the other relies on the user manually marking the slender obstacles. In this method, the slender obstacles are treated as two-dimensional obstacles. That is, this method abandons the use of space in the height direction and can only enclose the slender obstacles as a whole. The aircraft cannot circumvent the obstacles from above or below, resulting in wasted circumventing space and low circumventing efficiency.

To address the above problems, some embodiments of the present application provide a control method, a control system, an aircraft, and a storage medium.

Slender obstacles are widely distributed at low altitudes, and due to their inconspicuous characteristics, they pose a significant threat to aircraft widely used in operations such as aerial photography, surveying and mapping, crop protection, and rescue. The slender obstacles in some embodiments of the present application include power lines, such as electrical cables, control cables, signal cables, non-energized cables, or small branches. In most cases, slender obstacles have a certain sag characteristic, that is, they are suspended in a catenary structure. In rare cases, there are nearly rigid slender obstacles with very little sag. To fix the slender obstacles in place, they are usually supported by supporters. The supporters can be any possible form, such as rod-like structures or tower-like structures. The slender obstacles in some embodiments of the present application refer to obstacles with a small reflective cross-section. Obstacles meeting this characteristic, regardless of their shape or size, fall within the scope of protection of the present application. The present application does not impose any limitation on this.

The aircraft includes both manned and unmanned aircraft, including but not limited to fixed-wing aircraft and rotary-wing aircraft. Some embodiments of the present application do not limit the type of aircraft. When the aircraft is unmanned, it typically further includes a remote control device. The remote control device establishes a communication connection with the unmanned aircraft and controls its flight. The remote control device includes, but is not limited to, a remote controller, a smartphone, a computer, or a wearable device. Some embodiments of the present application are not limited to these examples.

For ease of illustration, the following description uses power lines and an agricultural unmanned aerial vehicle (UAV) operation scenario as examples to explain the solutions of the embodiments of the present application. Other types of application scenarios are similar and will not be repeated herein.

In an agricultural UAV operation scenario, agricultural UAVs often need to repeatedly operate over designated plots, such as for spraying or sowing. The operation area of the agricultural UAV is generally relatively fixed, and the power lines within the operation area are usually long-standing and have a relatively fixed spatial distribution. If real-time perception and timely response are relied upon for each flight, firstly, this poses a significant challenge to the performance and cost of the sensors; secondly, if the unmanned aerial vehicle needs to detect and calculate once or multiple times during each flight, its processing power requirements will increase; furthermore, even if multiple perceptions are successful, a single perception failure or untimely response can easily lead to a crash. This can result in irreparable losses for the user.

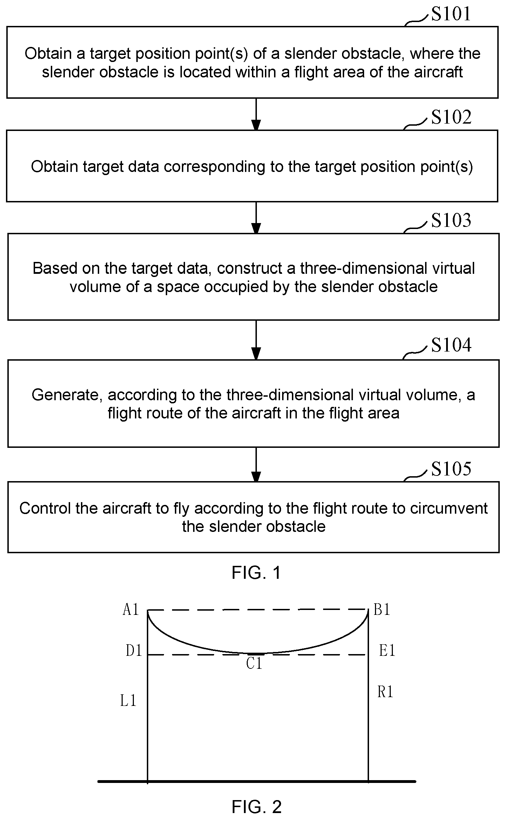

With reference to FIG. 1, FIG. 1 is a schematic diagram of a control method provided by an embodiment of the present application.

As shown in FIG. 1, the control method includes the following steps:
S101: Obtain a target position point(s) of a slender obstacle, where the slender obstacle is located within a flight area of the aircraft.

The target position points are key points characterizing the features of a power line. In some embodiments, the target position points include a first position point A and a second position point B; the power line has a first end and a second end; the first position point A is located at the first end, and the second position point B is located at the second end. Exemplarily, the first position point A and the second position point B respectively correspond to the positions of the highest points at the two ends of the power line.

In some embodiments, the first end corresponds to a first supporter, and the second end corresponds to a second supporter. The first supporter and the second supporter together support the power line. Exemplarily, the first and second supporters are rod-like or tower-like structures. Exemplarily, the first position point A and the second position point B respectively correspond to the positions where the power line contacts the left and right towers.

In some embodiments, the target position points further include a third position point C, which is located in the region between the first position point A and the second position point B. Exemplarily, the third position point corresponds to the location of the maximum sag of the power line. When the first position point A and the second position point B are at the same height, the third position point is generally located midway between the first and second supporters. When the first position point A and the second position point B are at different heights, the third position point C is generally closer to the tower of the target position point at the lower height.

In some embodiments of the present application, the manner of obtaining target position points of a power line includes: receiving a point-selection instruction; and in response to the point-selection instruction, obtaining the target position points.

In some embodiments of the present application, the point-selection instruction is issued by a user, and the determination of the target position points corresponding to the selected positions relies on the user's observation and judgment of the real physical environment. Exemplarily, the point-selection instruction originates from at least one of the following manners: RTK (Real-time kinematic) point-marking operation, remote controller point-marking operation, aircraft point-marking operation, or distance-measuring sensor point-marking operation.Taking RTK point-marking as an example: 1) A network RTK approach can be used to control the UAV to start the RTK module. The UAV first flies near the power line; then the user fine-tunes the UAV's position so that the UAV is near the target position points of the power line and performs the point-marking. 2) A handheld RTK rod approach can also be used. The user holds the RTK rod and walks near the target position points, then performs the point-marking. The point-marking operation can be a physical operation, for example, pressing or clicking, or a virtual operation, for example, a touch operation on an interactive interface.

In other embodiments of the present application, in order to reduce the user's workload and save human resources, the FPV (First Person View) images or point cloud images captured by a UAV imaging device can also be used to identify and predict power lines, thereby assisting in obtaining the target position points of the power lines. Taking FPV as an example: a reference point can be determined in response to the user's selection operation on the FPV image, or can be determined in response to automatic recognition technology applied to the FPV image, or can be determined using a combination of both methods. For example, an initial positioning can first be performed through the user's selection operation to lock a smaller range; then precise positioning can be performed using image recognition technology to lock the reference point within the smaller range. The above automatic recognition technology only needs to be capable of recognizing the target position points, and is not limited herein. The reference point corresponds to the pixel region of the target position points in the FPV. This approach reduces the user's workload. The user does not need to accurately observe and judge the real physical environment, only needs to observe in the FPV image whether the target position points of the power line appear, and determine the target position points through selection operations in the image. In some scenarios, it is even unnecessary for the user to precisely select the pixel of the target position points. Even if the selection is near the pixel of the target position points, the target position points can be quickly determined with the help of image recognition technology. In other scenarios, with the aid of image recognition technology or point cloud recognition technology, the UAV can automatically recognize the reference points without any user selection operation, thereby quickly determining the target position points. The above approaches greatly reduce the user's workload and do not rely on the user's observation and judgment of the real physical environment. Exemplarily, the FPV images can be obtained based on a vision sensor; exemplarily, the point cloud images can be obtained based on the fusion of a radar detector and a vision sensor.

It should be noted that, considering the real working environment, the determination of the target position points may have certain errors. Especially in the user point-marking approach, the user cannot guarantee that the reference point is precisely located at the target position points before performing the point-marking. Therefore, according to the application needs, a certain safety margin can be added based on the measured or calculated values of the target position points to eliminate the uncertainty of the results.

S102: Obtain target data corresponding to the target position point(s).

In some embodiments of the present application, the target data can include three-dimensional position information. For example, it includes two-dimensional position coordinates and altitude information. The target data can also include semantic information. The semantic information can be automatically labeled or manually labeled by the user.

In some embodiments of the present application, when the target position points are determined using RTK point-marking operations, remote controller point-marking operations, aircraft point-marking operations, or distance-measuring sensor point-marking operations, the positioning results at the target position points can be directly used to determine the target data. For example, the target data can be determined using the RTK positioning result at the target position, the positioning result of the GPS built into the remote controller, the GPS positioning result of the aircraft, or the measurement result of the distance-measuring sensor.

In other embodiments of the present application, when the target position points are determined using the FPV image, in response to the determination of reference points in the image, the global positioning information of the target object at the specified position and the local positioning information of the reference point relative to the target object are obtained. The target object includes any one of the aircraft body, the imaging device, or the gimbal carrying the imaging device. The specified position includes a first specified position P1 and a second specified position P2 different from the first specified position; based on the global positioning information and the local positioning information, the target data (x, y, z) of the target position points is obtained. Exemplarily, the global positioning information includes (x1, y1, z1) at P1 and (x2, y2, z2) at P2.

Further, the position of a reference point in the image is obtained; the attitude of the reference point relative to the target object is obtained;
Based on the position of the reference point in the image and the attitude of the reference point relative to the target object, the local positioning information is obtained.

Furthermore, the position of the reference point in the image is obtained; the attitude and relative height of the reference point relative to the target object are obtained. Based on the position of the reference point in the image and the attitude and relative height of the reference point relative to the target object, the local positioning information is obtained. Herein, the relative height can be measured and obtained by a height sensor mounted on the UAV.

S103: Based on the target data, construct a three-dimensional virtual volume of a space occupied by the slender obstacle.

In some embodiments of the present application, the three-dimensional virtual volume includes a no-fly zone. The no-fly zone characterizes an area where UAV passage is prohibited.

In some embodiments of the present application, the three-dimensional virtual volume includes a safe zone. The safe zone characterizes an area where UAV passage is permitted. The safe zone includes areas outside the no-fly zone, for example, at least one of the areas above, below, to the left, or to the right of the no-fly zone. In some embodiments of the present application, the space occupied by the power lines is divided into a three-dimensional virtual volume. Compared with the existing technology, which treats the power line as a two-dimensional obstacle and entirely designates it as a no-fly zone, this approach at least adds the feasibility of the area above or below the no-fly zone as a circumventing space, significantly improving the efficiency of circumventing. When the UAV passes through the area above or below the no-fly zone, a large circumventing radius is not required, which reduces kinetic energy loss. The UAV can also continue operations while passing, avoiding omissions in the work area or interruptions in the operation process. In the scenario of agricultural UAVs, because the work area itself is limited in size, power lines are often arranged in a complex manner within the work area. If the two-dimensional plane occupied by the power line is entirely designated as a no-fly zone, on one hand, areas near the power line that should be worked on become inaccessible, resulting in poor work performance; on the other hand, the UAV requires a very large circumventing radius to avoid the power lines, causing significant kinetic energy loss. In some cases, the UAV may have no available path to circumvent, easily flying out of the user's plot or into another user's plot or non-work area, unexpectedly interrupting the operation process and affecting operational efficiency. If the spraying payload is not turned off in time, leakage may occur, and in some cases, phytotoxicity may result.

In some embodiments of the present application, a certain volumetric safety margin exists between the safe zone and the no-fly zone to ensure operational safety. The setting of the safety margin better aligns with safety considerations in real working scenarios. Exemplarily, the three-dimensional virtual volume further includes a buffer zone. The buffer zone is located between the safe zone and the no-fly zone.

In some embodiments of the present application, differentiated markings are applied between the safe zone, the no-fly zone, and the buffer zone. For example, this can be achieved using different colors, different grayscale values, or different graphic and text markings, so that the user can obtain an intuitive experience.

In some embodiments, in a case where the safe zone includes a lower region other than the no-fly zone, a distance between the lower region and a specific object is greater than a set threshold. The specific object includes at least one of an operation object, the ground surface, or a building. Further, the set threshold is positively correlated with at least one of a size of a safety envelope of the UAV or an operation height of the UAV. In some scenarios, when the UAV passes through the safe zone of the lower region, a power line is above the UAV, and an operation object, such as crops, is below. The UAV needs to maintain a certain safety distance from the power line upward, and needs to maintain a certain operation distance from the operation object downward. Exemplarily, the safety envelope of the UAV is related to factors such as a volume size of the UAV, a type of the UAV or a type of a UAV operation task, user settings, and the like.

In some embodiments, with reference to FIG. 2, L1 and R1 represent left and right supporters of the power line; point A1 is a support point of the power line on the left supporter L1; point B1 is a support point of the power line on the right supporter R1; and point C1 is a point at which the sag of the power line is greatest. When L1 and R1 are located on a same reference plane, C is usually a point at which the power line is closest to the reference plane. Thus, the no-fly zone is enclosed by a first virtual connecting line A1B1 between the first position point A1 and the second position point B1 (shown as a dashed line, the same below) and a second virtual connecting line passing through the third position point C1 and parallel to the first virtual connecting line.

In some embodiments, the no-fly zone is enclosed by a first virtual connecting line A1B1 between the first position point A1 and the second position point B1, a second virtual connecting line 1 passing through the third position point and parallel to the first virtual connecting line, the first supporter L1, and the second supporter L2. Further, the second virtual connecting line intersects outward ends of left and right towers at points D1 and E1, respectively. D1 and E1 may respectively be intersection points with inner sides of the left and right towers, or may be intersection points with outer sides of the left and right towers. In some cases, for example, when the supporters are utility poles, the utility poles may be abstracted as straight lines. D1 and E1 are intersection points with the left and right utility poles, respectively. A1, B1, D1, and E1 form boundary points of the no-fly zone.

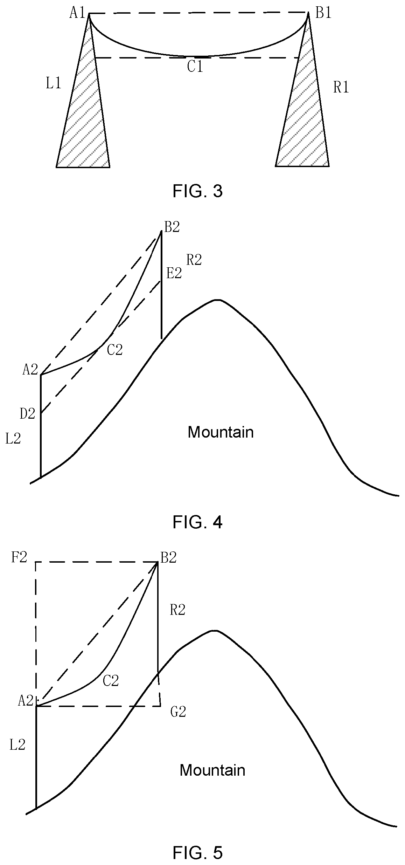

In some embodiments, the no-fly zone further includes positions where the towers themselves are located, for example, with reference to FIG. 3, regions represented by diagonal-line shading. In some cases, positions where the towers of the present application are located may be point-marked in advance; in other cases, considering that volumes of the towers themselves are much larger than that of the power line and are easily detected by a perception module of the UAV, safety of circumventing slender obstacle(s) may also be improved based on pre-marked three-dimensional virtual volume information combined with real-time perception information during navigation.

In some embodiments, for example, in scenarios of a mountain slope or scenarios where tower heights are different, there is often a relative height difference between the first position point and the second position point located in a length direction of the slender obstacle(s). For example, the two have different elevations. Exemplarily, with reference to FIG. 4, L2 and R2 represent left and right supporters of the power line; the no-fly zone is enclosed by a first virtual connecting line A2B2 between the first position point A2 and the second position point B2, a second virtual connecting line passing through the third position point C2 and parallel to the first virtual connecting line A2B2, the first supporter L2, and the second supporter L2. Further, the second virtual connecting line intersects the left and right towers at points D2 and E2, respectively. A2, B2, D2, and E2 form boundary points of the no-fly zone. Exemplarily, the no-fly zone is substantially a three-dimensional parallelogram region existing in space.

When there is a relative height difference between the supporters at two ends of the slender obstacle(s), adopting the above no-fly zone planning method can effectively improve utilization of an allowed passage region. With reference to FIG. 5, it should be noted that FIG. 5 also falls within a scope of marking and point-marking the slender obstacle(s) in the present application. Defining the no-fly zone as a rectangular no-fly zone enclosed by A2, F2, B2, and G2, or as a triangular no-fly zone enclosed by A2, G2, and B2, greatly loses safe passage attributes of a region enclosed by B2, G2, and C2. In FIG. 5, the parallelogram division manner provides more safe regions open to the UAV for allowed passage, especially a passage region between the power line and a mountain. This part of the passage region is more important for the UAV, because it avoids some large-attitude circumvent actions that would otherwise be required for the aircraft to circumvent from a side or above, such as turning, climbing, vertical ascending, and the like, thereby reducing energy consumption of the UAV and improving passage efficiency of the UAV. In addition, compared with rectangular or triangular division manners, when the parallelogram division manner is applied, a lateral span of the passage region between the power line and the mountain is larger. This division manner provides greater lateral movement freedom for passage of the aircraft, which is beneficial to efficient passage of the UAV.

In some cases, considering safety, an additional safety margin may be added on a basis of the above no-fly zone, and a no-fly zone in a real scenario is set accordingly.

In some embodiments, after the three-dimensional virtual volume is constructed, the three-dimensional virtual volume may be stored to form a database capable of being repeatedly invoked. The database may be stored in association with a flight area. When the UAV operates in the flight area next time, or when another UAV operates in the flight area, the three-dimensional virtual volume information of a space where the power line is located in the flight area may be invoked, for use as a circumvent reference during operation path planning. Even if the UAV does not have strong sensor capability, safe and efficient power line obstacle avoidance can still be achieved, thereby improving reuse of information.

In some embodiments, the three-dimensional virtual volume includes the towers themselves. For example, in some cases, there is more than one power line. Within a range of the three-dimensional virtual volume, there may be multiple continuous towers supporting multiple segments of power lines. In this case, on a basis of the three-dimensional virtual volume, obstacle avoidance in spaces between adjacent no-fly zones and spaces where intermediate towers are located also needs to be considered, to ensure that collision with the intermediate towers does not occur.

S104: Generate, according to the three-dimensional virtual volume, a flight route of the aircraft in the flight area.

S105: Control the aircraft to fly according to the flight route to circumvent the slender obstacle.

In some embodiments of the present application, before flight route planning, the three-dimensional virtual volume of the space where the power line is located has already been constructed in advance, which is equivalent to moving the problem forward. Since factors of the three-dimensional virtual volume have already been considered during flight route planning, the generated flight route is relatively safe. The UAV only needs to operate according to the flight route to effectively circumvent the power line, thereby avoiding collision with or entanglement with the power line and even avoiding crash, reducing an active perception load during flight, reducing processing computing power of the UAV, improving operation efficiency of the UAV, and improving an autonomous outdoor flight capability of the UAV.

In some embodiments, the flight route may be automatically planned by a flight control module of the UAV, or may be manually planned by a user. If at least part of the planned flight route passes through the no-fly zone, a warning prompt will be issued, or the flight route will be automatically replanned.

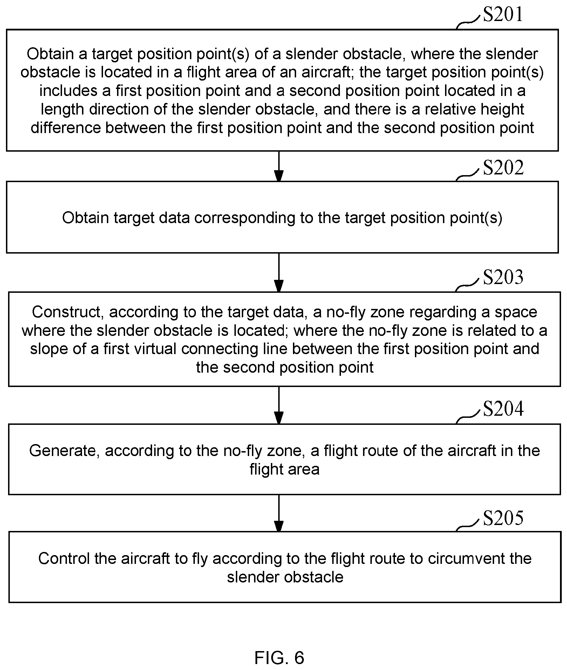

In some embodiments, with reference to FIG. 6, FIG. 6 is a schematic diagram of another control method provided in some embodiments of the present application. The method includes the following steps:
S201: Obtain a target position point(s) of a slender obstacle, where the slender obstacle is located in a flight area of an aircraft; the target position point(s) includes a first position point and a second position point located in a length direction of the slender obstacle, and there is a relative height difference between the first position point and the second position point;
S202: Obtain target data corresponding to the target position point(s);
S203: Construct, according to the target data, a no-fly zone regarding a space where the slender obstacle is located; where the no-fly zone is related to a slope of a first virtual connecting line between the first position point and the second position point;
S204: Generate, according to the no-fly zone, a flight route of the aircraft in the flight area; and
S205: Control the aircraft to fly according to the flight route to circumvent the slender obstacle.

It should be noted that a person skilled in the art can clearly understand that, for convenience and brevity of description, specific working processes of the control method described above may refer to corresponding processes in the foregoing embodiments, and will not be repeated herein.

In some embodiments, the aircraft includes a power system. The power system may include one or more propulsion devices, one or more actuators corresponding to the one or more propulsion devices, and one or more electronic speed controllers. For a rotor aircraft, the propulsion device includes a propeller; the electronic speed controller is configured to receive a driving signal generated by the control system and provide a driving current to the actuator according to the driving signal, so as to control a rotational speed of the actuator. The actuator is configured to drive rotation of the propeller, thereby providing power for movement of the aircraft. This power enables the aircraft to achieve motion in one or more degrees of freedom. In some embodiments, the aircraft may rotate around one or more rotation axes. For example, the above rotation axes may include a roll axis, a yaw axis, and a pitch axis. It should be understood that the actuator may be electrically driven, oil-driven, or hybrid-driven.

In some embodiments, the control system includes a controller and a sensing system. The sensing system is configured to measure attitude information of the aircraft, that is, position and state information of the aircraft in space, such as three-dimensional position, three-dimensional angles, three-dimensional velocity, three-dimensional acceleration, and three-dimensional angular velocity. The sensing system may include at least one of sensors such as a gyroscope, an ultrasonic sensor, an electronic compass, an Inertial Measurement Unit (IMU), a vision sensor, a global navigation satellite system, and a barometer. For example, the global navigation satellite system may be a Global Positioning System (GPS). The controller is configured to control movement of the aircraft. For example, the aircraft may be controlled to move according to attitude information measured by the sensing system. It should be understood that the controller may control the aircraft according to pre-programmed instructions.

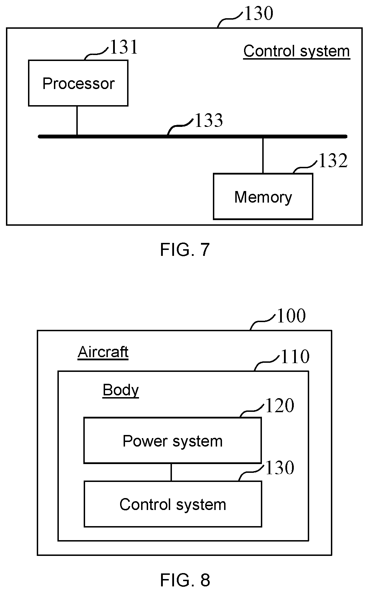

With reference to FIG. 7, FIG. 7 is a schematic diagram of the control system provided in some embodiments of the present application.

As shown in FIG. 7, the control system 130 includes a processor 131 and a memory 132. The processor 131 and the memory 132 are connected via a bus 133. The bus 133 may be, for example, an Inter-Integrated Circuit (I2C) bus. The control system 130 is configured for control.

Specifically, the processor 131 may be a Micro-controller Unit (MCU), a Central Processing Unit (CPU), or a Digital Signal Processor (DSP), and the like.

Specifically, the memory 132 may be a Flash chip, a Read-Only Memory (ROM), a disk, an optical disc, a USB drive, or a mobile hard drive, and the like.

The processor 131 is configured to run a computer program stored in the memory 132, and when executing the computer program, implements the following steps:
obtaining target position point(s) of a slender obstacle, where the slender obstacle is located in a flight area of an aircraft;
obtaining target data corresponding to the target position point(s);
constructing, according to the target data, a three-dimensional virtual volume of a space where the slender obstacle is located;
generating, according to the three-dimensional virtual volume, a flight route of the aircraft in the flight area; and
controlling the aircraft to fly according to the flight route to circumvent the slender obstacle.

In some embodiments, the processor 131 is configured to run a computer program stored in the memory 132, and when executing the computer program, implements the following steps:
obtaining target position point(s) of a slender obstacle, where the slender obstacle is located in a flight area of the aircraft, and the target position point(s) includes a first position point and a second position point located in a length direction of the slender obstacle, with a relative height difference between the first position point and the second position point;
obtaining target data corresponding to the target position point(s); and
constructing, according to the target data, a no-fly zone regarding a space where the slender obstacle is located, where the no-fly zone is related to a slope of a first virtual connecting line between the first position point and the second position point.

It should be noted that a person skilled in the art can clearly understand that, for convenience and brevity of description, specific working processes of the control system described above may refer to corresponding processes in the foregoing control method embodiments, and will not be repeated herein.

With reference to FIG. 8, FIG. 8 is a schematic diagram of an aircraft provided in some embodiments of the present application.

As shown in FIG. 8, the aircraft 100 includes a body 110, a power system 120, and a control system 130. The power system 120 is disposed on the body 110 and is configured to provide flight power for the aircraft 100; the control system 130 is disposed on the body 110 and is configured to control the aircraft 100.

It should be noted that a person skilled in the art can clearly understand that, for convenience and brevity of description, specific working processes of the aircraft described above may refer to corresponding processes in the foregoing control method embodiments, and will not be repeated herein.

Some embodiments of the present application also provide a storage medium for computer-readable storage. The storage medium stores a computer program, the computer program including program instructions; the processor executes the program instructions to implement steps of the control method provided in the foregoing embodiments.

The storage medium may be an internal storage unit of the control system or the aircraft in any of the foregoing embodiments, for example, a hard disk or memory of the control system or the aircraft. The storage medium may also be an external storage device of the control system or the aircraft, for example, a plug-in hard disk, a Smart Media Card (SMC), a Secure Digital (SD) card, a Flash Card, or the like equipped on the control system or the aircraft.

Functions of the elements disclosed in some embodiments of the present application can be implemented through circuits or processing circuits. These circuits include a general-purpose processor, a dedicated processor, an integrated circuit, an Application-Specific Integrated Circuit (ASIC), conventional circuits, and/or a combination thereof. They are configured or programmed to perform the disclosed functions. Processors are regarded as processing circuits or circuits because they include transistors and other circuitry. In the present disclosure, a circuit, unit, or device is hardware that performs or is programmed to perform the functions. The hardware may be any hardware disclosed herein, or other known hardware that, when programmed or configured, can perform the functions. When the hardware is a processor that may be regarded as a type of circuit, the circuit, device, or unit is a combination of hardware and software; the software is used to configure the hardware and/or processor.

It should be understood that the terms used in this description of the present application are solely for the purpose of describing specific embodiments and are not intended to limit the present application. As used in this description and the appended claims, unless the context clearly indicates otherwise, the singular forms "a," "an," and "the" are intended to include the plural forms.

It should also be understood that the term "and/or" used in this description and the appended claims refers to any one or more of the listed items in any combination, including all possible combinations, and includes these combinations.

The foregoing descriptions are merely specific embodiments of the present application, but the protection scope of the present application is not limited thereto. Any person skilled in the art, within the technical scope disclosed in the present application, can readily conceive of various equivalent modifications or substitutions, and such modifications or substitutions should be encompassed within the protection scope of the present application. Therefore, the protection scope of the present application shall be defined by the scope of the claims.

## Claims

1. A control system, **characterized in that** the control system comprises:
at least one processor; and
at least one memory comprising computer program code, wherein the at least one memory and the computer program code are configured with the at least one processor such that the system is at least capable of performing the following operations:
obtaining a target position point of a slender obstacle, wherein the slender obstacle is located within a flight area of an aircraft;
obtaining target data corresponding to the target position point;
constructing a three-dimensional virtual volume of a space occupied by the slender obstacle based on the target data;
generating a flight route for the aircraft within the flight area according to the three-dimensional virtual volume; and
controlling the aircraft to fly along the flight route to circumvent the slender obstacle.

2. The system according to claim 1, wherein the three-dimensional virtual volume comprises a no-fly zone, the no-fly zone characterizing an area where passage of the aircraft is prohibited.

3. The system according to claim 2, wherein the three-dimensional virtual volume further comprises a safe zone, the safe zone characterizing an area where passage of the aircraft is permitted.

4. The system according to claim 3, wherein a safety margin with a certain volume exists between the safe zone and the no-fly zone.

5. The system according to claim 3, wherein the safe zone comprises an upper area outside the no-fly zone and/or a lower area outside the no-fly zone.

6. The system according to claim 5, wherein, in a case where the safe zone comprises a lower area outside the no-fly zone, a distance between a boundary of the lower area and a specific object is greater than a set threshold, the specific object comprising at least one of an operational object, the ground, or an object on the ground.

7. The system according to claim 6, wherein the set threshold is positively correlated with at least one of a size of the aircraft's safety envelope or an operational altitude of the aircraft.

8. The system according to any one of claims 2 to 7, wherein the target position point comprises a first position point and a second position point, the slender obstacle has a first end and a second end, the first position point being located at the first end, and the second position point being located at the second end.

9. The system according to claim 8, wherein the first end corresponds to a first supporter, the second end corresponds to a second supporter, and the first supporter and the second supporter jointly support the slender obstacle.

10. The system according to claim 9, wherein the no-fly zone comprises locations of the first supporter and the second supporter.

11. The system according to claim 8, wherein the target position point further comprises a third position point, the third position point being located in a region between the first position point and the second position point.

12. The system according to claim 11, wherein the third position point corresponds to a location where a sag of the slender obstacle is maximum.

13. The system according to claim 8, wherein the no-fly zone is enclosed by a first virtual connecting line between the first position point and the second position point and a second virtual connecting line passing through the third position point and parallel to the first virtual connecting line.

14. The system according to claim 9, wherein the no-fly zone is enclosed by a first virtual connecting line between the first position point and the second position point, a second virtual connecting line passing through the third position point and parallel to the first virtual connecting line, the first supporter, and the second supporter.

15. The system according to claim 1, wherein the obtaining the target position point of the slender obstacle comprises:
receiving a point-selection instruction, the point-selection instruction being issued by a user; and
in response to the point-selection instruction, obtaining the target position point.

16. The system according to claim 15, wherein the point-selection instruction originates from at least one of the following: a point-marking operation by RTK, a point-marking operation by a remote controller, a point-marking operation by the aircraft, a point-marking operation by a ranging sensor, or a selection operation on an interactive interface.

17. The system according to claim 1, wherein the target position point is determined in response to an automatic recognition technology applied to an image, the image being obtained from detection information of a sensor of the aircraft.

18. The system according to claim 17, wherein the image comprises at least one of an FPV image or a point cloud image.

19. The system according to claim 1, wherein the obtaining target data corresponding to the target position point comprises:
in response to determining a reference point in an image, obtaining global positioning information of a target object at a specified position and local positioning information of the reference point relative to the target object, wherein the image is captured by a capturing device of the aircraft, the target object comprises any one of the aircraft's body, the capturing device, or a gimbal carrying the capturing device, the reference point corresponds to the target position point, and the specified position comprises a first specified position and a second specified position different from the first specified position; and
obtaining the target data of the target position point based on the global positioning information and the local positioning information.

20. The system according to claim 19, wherein the obtaining the local positioning information of the reference point relative to the target object comprises:
obtaining a position of the reference point in the image;
obtaining an attitude of the reference point relative to the target object; and
obtaining the local positioning information based on the position of the reference point in the image and the attitude of the reference point relative to the target object.

21. The system according to claim 19, wherein the obtaining the local positioning information of the reference point relative to the target object comprises:
obtaining a position of the reference point in the image;
obtaining an attitude and a relative height of the reference point relative to the target object; and
obtaining the local positioning information based on the position of the reference point in the image and the attitude and the relative height of the reference point relative to the target object.

22. The system according to claim 19, wherein the global positioning information comprises GPS positioning information.

23. The system according to claim 1, wherein the slender obstacle is a slender obstacle having a sag characteristic.

24. The system according to claim 1, wherein the slender obstacle is a power line.

25. The system according to claim 1, wherein the target data comprises semantic information.

26. The system according to claim 1, wherein the at least one memory and the computer program code are configured with at least one processor such that the system is at least further capable of performing the following operation:
storing the three-dimensional virtual volume to form a database that can be repeatedly invoked.

27. The system according to claim 26, wherein the database is stored in association with the flight area.

28. The system according to claim 2, wherein the at least one memory and the computer program code are configured with at least one processor such that the system is at least further capable of performing the following operation:
issuing a prompt and/or automatically replanning the flight route when at least a portion of the planned flight route passes through the no-fly zone.

29. A control method, **characterized in that** the control method comprises:
obtaining a target position point of a slender obstacle, wherein the slender obstacle is located within a flight area of an aircraft;
obtaining target data corresponding to the target position point;
constructing a three-dimensional virtual volume of a space occupied by the slender obstacle based on the target data;
generating a flight route for the aircraft within the flight area according to the three-dimensional virtual volume; and
controlling the aircraft to fly along the flight route to circumvent the slender obstacle.

30. The method according to claim 29, wherein the three-dimensional virtual volume comprises a no-fly zone, the no-fly zone characterizing an area where passage of the aircraft is prohibited.

31. The method according to claim 29, wherein the three-dimensional virtual volume further comprises a safe zone, the safe zone characterizing an area where passage of the aircraft is permitted.

32. The method according to claim 30, wherein a safety margin with a certain volume exists between the safe zone and the no-fly zone.

33. The method according to claim 31, wherein the safe zone comprises an upper area outside the no-fly zone and/or a lower area outside the no-fly zone.

34. The method according to claim 33, wherein, in a case where the safe zone comprises a lower area outside the no-fly zone, a distance between a boundary of the lower area and a specific object is greater than a set threshold, the specific object comprising at least one of an operational object, the ground, or an object on the ground.

35. The method according to claim 34, wherein the set threshold is positively correlated with at least one of a size of the aircraft's safety envelope or an operational altitude of the aircraft.

36. The method according to any one of claims 30 to 35, wherein the target position point comprises a first position point and a second position point, the slender obstacle has a first end and a second end, the first position point being located at the first end, and the second position point being located at the second end.

37. The method according to claim 36, wherein the first end corresponds to a first supporter, the second end corresponds to a second supporter, and the first supporter and the second supporter jointly support the slender obstacle.

38. The method according to claim 37, wherein the no-fly zone comprises locations of the first supporter and the second supporter.

39. The method according to claim 36, wherein the target position point further comprises a third position point, the third position point being located in a region between the first position point and the second position point.

40. The method according to claim 39, wherein the third position point corresponds to a location where a sag of the slender obstacle is maximum.

41. The method according to claim 36, wherein the no-fly zone is enclosed by a first virtual connecting line between the first position point and the second position point and a second virtual connecting line passing through the third position point and parallel to the first virtual connecting line.

42. The method according to claim 41, wherein the no-fly zone is enclosed by a first virtual connecting line between the first position point and the second position point, a second virtual connecting line passing through the third position point and parallel to the first virtual connecting line, the first supporter, and the second supporter.

43. The method according to claim 29, wherein the obtaining the target position point of the slender obstacle comprises:
receiving a point-selection instruction, the point-selection instruction being issued by a user; and
in response to the point-selection instruction, obtaining the target position point.

44. The method according to claim 43, wherein the point-selection instruction originates from at least one of the following: a point-marking operation by RTK, a point-marking operation by a remote controller, a point-marking operation by the aircraft, a point-marking operation by a ranging sensor, or a selection operation on an interactive interface.

45. The method according to claim 29, wherein the target position point is determined in response to an automatic recognition technology applied to an image, the image being obtained from detection information of a sensor of the aircraft.

46. The method according to claim 45, wherein the image comprises at least one of an FPV image or a point cloud image.

47. The method according to claim 29, wherein the obtaining target data corresponding to the target position point comprises:
in response to determining a reference point in an image, obtaining global positioning information of a target object at a specified position and local positioning information of the reference point relative to the target object, wherein the image is captured by a capturing device of the aircraft, the target object comprises any one of the aircraft's body, the capturing device, or a gimbal carrying the capturing device, the reference point corresponds to the target position point, and the specified position comprises a first specified position and a second specified position different from the first specified position; and
obtaining the target data of the target position point based on the global positioning information and the local positioning information.

48. The method according to claim 47, wherein the obtaining the local positioning information of the reference point relative to the target object comprises:
obtaining a position of the reference point in the image;
obtaining an attitude of the reference point relative to the target object; and
obtaining the local positioning information based on the position of the reference point in the image and the attitude of the reference point relative to the target object.

49. The method according to claim 47, wherein the obtaining the local positioning information of the reference point relative to the target object comprises:
obtaining a position of the reference point in the image;
obtaining an attitude and a relative height of the reference point relative to the target object; and
obtaining the local positioning information based on the position of the reference point in the image and the attitude and the relative height of the reference point relative to the target object.

50. The method according to claim 47, wherein the global positioning information comprises GPS positioning information.

51. The method according to claim 29, wherein the slender obstacle is a slender obstacle having a sag characteristic.

52. The method according to claim 29, wherein the slender obstacle is a power line.

53. The method according to claim 29, wherein the target data comprises semantic information.

54. The method according to claim 29, wherein the at least one memory and the computer program code are configured with at least one processor such that the method is at least further capable of performing the following operation:
storing the three-dimensional virtual volume to form a database that can be repeatedly invoked.

55. The method according to claim 54, wherein the database is stored in association with the flight area.

56. The method according to claim 30, wherein the at least one memory and the computer program code are configured with at least one processor such that the method is at least further capable of performing the following operation:
issuing a prompt and/or automatically replanning the flight route when at least a portion of the planned flight route passes through the no-fly zone.

57. A control system, **characterized in that** the control system comprises:
at least one processor; and
at least one memory comprising computer program code, wherein the at least one memory and the computer program code are configured with the at least one processor such that the system is at least capable of performing the following operations:
obtaining a target position point of a slender obstacle, wherein the slender obstacle is located within a flight area of an aircraft, the target position point comprising a first position point and a second position point along a length direction of the slender obstacle, and a relative height difference exists between the first position point and the second position point;
obtaining target data corresponding to the target position point; and
constructing, based on the target data, a no-fly zone for a space where the slender obstacle is located, wherein the no-fly zone is related to a slope of a first virtual connecting line between the first position point and the second position point.

58. The system according to claim 57, wherein the at least one memory and the computer program code are configured with the at least one processor such that the system is at least capable of further performing the following operations:
generating a flight route for the aircraft to fly within the flight area based on the no-fly zone; and
controlling the aircraft to fly along the flight route to circumvent the slender obstacle.

59. The system according to claim 57, wherein the three-dimensional virtual volume comprises a no-fly zone, the no-fly zone characterizing a region prohibited for the aircraft to pass through.

60. The system according to claim 59, wherein the no-fly zone is substantially in a shape of parallelogram.

61. The system according to claim 59, wherein the three-dimensional virtual volume further comprises a safe zone, the safe zone characterizing an area where passage of the aircraft is permitted.

62. The system according to claim 61, wherein a safety margin with a certain volume exists between the safe zone and the no-fly zone.

63. The system according to claim 61, wherein the safe zone comprises an upper area outside the no-fly zone and/or a lower area outside the no-fly zone.

64. The system according to claim 63, wherein, in a case where the safe zone comprises a lower area outside the no-fly zone, a distance between a boundary of the lower area and a specific object is greater than a set threshold, the specific object comprising at least one of an operational object, the ground, or an object on the ground.

65. The system according to claim 64, wherein the set threshold is positively correlated with at least one of a size of the aircraft's safety envelope or an operational altitude of the aircraft.

66. The system according to any one of claims 59 to 65, wherein the target position point comprises a first position point and a second position point, the slender obstacle has a first end and a second end, the first position point being located at the first end, and the second position point being located at the second end.

67. The system according to claim 66, wherein the first end corresponds to a first supporter, the second end corresponds to a second supporter, and the first supporter and the second supporter jointly support the slender obstacle.

68. The system according to claim 67, wherein the first supporter and the second supporter are respectively located at two locations on a ground surface with a terrain difference.

69. The system according to claim 67, wherein the no-fly zone comprises locations of the first supporter and the second supporter.

70. The system according to claim 66, wherein the target position point further comprises a third position point, the third position point being located in a region between the first position point and the second position point.

71. The system according to claim 70, wherein the third position point corresponds to a location where a sag of the slender obstacle is maximum.

72. The system according to claim 66, wherein the no-fly zone is enclosed by a first virtual connecting line between the first position point and the second position point and a second virtual connecting line passing through the third position point and parallel to the first virtual connecting line.

73. The system according to claim 67, wherein the no-fly zone is enclosed by a first virtual connecting line between the first position point and the second position point, a second virtual connecting line passing through the third position point and parallel to the first virtual connecting line, the first supporter, and the second supporter.

74. The system according to claim 57, wherein the obtaining the target position point of the slender obstacle comprises:
receiving a point-selection instruction, the point-selection instruction being issued by a user; and
in response to the point-selection instruction, obtaining the target position point.

75. The system according to claim 74, wherein the point-selection instruction originates from at least one of the following: a point-marking operation by RTK, a point-marking operation by a remote controller, a point-marking operation by the aircraft, a point-marking operation by a ranging sensor, or a selection operation on an interactive interface.

76. The system according to claim 57, wherein the target position point is determined in response to an automatic recognition technology applied to an image, the image being obtained from detection information of a sensor of the aircraft.

77. The system according to claim 76, wherein the image comprises at least one of an FPV image or a point cloud image.

78. The system according to claim 57, wherein the obtaining target data corresponding to the target position point comprises:
in response to determining a reference point in an image, obtaining global positioning information of a target object at a specified position and local positioning information of the reference point relative to the target object, wherein the image is captured by a capturing device of the aircraft, the target object comprises any one of the aircraft's body, the capturing device, or a gimbal carrying the capturing device, the reference point corresponds to the target position point, and the specified position comprises a first specified position and a second specified position different from the first specified position; and
obtaining the target data of the target position point based on the global positioning information and the local positioning information.

79. The system according to claim 78, wherein the obtaining the local positioning information of the reference point relative to the target object comprises:
obtaining a position of the reference point in the image;
obtaining an attitude of the reference point relative to the target object; and
obtaining the local positioning information based on the position of the reference point in the image and the attitude of the reference point relative to the target object.

80. The system according to claim 78, wherein the obtaining the local positioning information of the reference point relative to the target object comprises:
obtaining a position of the reference point in the image;
obtaining an attitude and a relative height of the reference point relative to the target object; and
obtaining the local positioning information based on the position of the reference point in the image and the attitude and the relative height of the reference point relative to the target object.

81. The system according to claim 78, wherein the global positioning information comprises GPS positioning information.

82. The system according to claim 57, wherein the slender obstacle is a slender obstacle having a sag characteristic.

83. The system according to claim 57, wherein the slender obstacle is a power line.

84. The system according to claim 57, wherein the target data comprises semantic information.

85. The system according to claim 57, wherein the at least one memory and the computer program code are configured with at least one processor such that the system is at least further capable of performing the following operation:
storing the three-dimensional virtual volume to form a database that can be repeatedly invoked.

86. The system according to claim 85, wherein the database is stored in association with the flight area.

87. The system according to claim 58, wherein the at least one memory and the computer program code are configured with at least one processor such that the system is at least further capable of performing the following operation:
issuing a prompt and/or automatically replanning the flight route when at least a portion of the planned flight route passes through the no-fly zone.

88. A control method, **characterized in that** the method comprises:
obtaining a target position point of a slender obstacle, wherein the slender obstacle is located within a flight area of an aircraft, the target position point comprising a first position point and a second position point along a length direction of the slender obstacle, and a relative height difference exists between the first position point and the second position point;
obtaining target data corresponding to the target position point; and
constructing, based on the target data, a no-fly zone for a space where the slender obstacle is located, wherein the no-fly zone is related to a slope of a first virtual connecting line between the first position point and the second position point.

89. The method according to claim 88, further comprising:
generating a flight route for the aircraft to fly within the flight area based on the no-fly zone; and
controlling the aircraft to fly along the flight route to circumvent the slender obstacle.

90. The method according to claim 88, wherein the three-dimensional virtual volume comprises a no-fly zone, the no-fly zone characterizing a region prohibited for the aircraft to pass through.

91. The method according to claim 90, wherein the no-fly zone is substantially in a shape of parallelogram.

92. The method according to claim 90, wherein the three-dimensional virtual volume further comprises a safe zone, the safe zone characterizing an area where passage of the aircraft is permitted.

93. The method according to claim 92, wherein a safety margin with a certain volume exists between the safe zone and the no-fly zone.

94. The method according to claim 92, wherein the safe zone comprises an upper area outside the no-fly zone and/or a lower area outside the no-fly zone.

95. The method according to claim 94, wherein, in a case where the safe zone comprises a lower area outside the no-fly zone, a distance between a boundary of the lower area and a specific object is greater than a set threshold, the specific object comprising at least one of an operational object, the ground, or an object on the ground.

96. The method according to claim 95, wherein the set threshold is positively correlated with at least one of a size of the aircraft's safety envelope or an operational altitude of the aircraft.

97. The method according to any one of claims 88 to 96, wherein the target position point comprises a first position point and a second position point, the slender obstacle has a first end and a second end, the first position point being located at the first end, and the second position point being located at the second end.

98. The method according to claim 97, wherein the first end corresponds to a first supporter, the second end corresponds to a second supporter, and the first supporter and the second supporter jointly support the slender obstacle.

99. The method according to claim 98, wherein the first supporter and the second supporter are respectively located at two locations on a ground surface with a terrain difference.

100. The method according to claim 99, wherein the no-fly zone comprises locations of the first supporter and the second supporter.

101. The method according to claim 97, wherein the target position point further comprises a third position point, the third position point being located in a region between the first position point and the second position point.

102. The method according to claim 101, wherein the third position point corresponds to a location where a sag of the slender obstacle is maximum.

103. The method according to claim 97, wherein the no-fly zone is enclosed by a first virtual connecting line between the first position point and the second position point and a second virtual connecting line passing through the third position point and parallel to the first virtual connecting line.

104. The method according to claim 98, wherein the no-fly zone is enclosed by a first virtual connecting line between the first position point and the second position point, a second virtual connecting line passing through the third position point and parallel to the first virtual connecting line, the first supporter, and the second supporter.

105. The method according to claim 88, wherein the obtaining the target position point of the slender obstacle comprises:
receiving a point-selection instruction, the point-selection instruction being issued by a user; and
in response to the point-selection instruction, obtaining the target position point.

106. The method according to claim 105, wherein the point-selection instruction originates from at least one of the following: a point-marking operation by RTK, a point-marking operation by a remote controller, a point-marking operation by the aircraft, a point-marking operation by a ranging sensor, or a selection operation on an interactive interface.

107. The method according to claim 88, wherein the target position point is determined in response to an automatic recognition technology applied to an image, the image being obtained from detection information of a sensor of the aircraft.

108. The method according to claim 107, wherein the image comprises at least one of an FPV image or a point cloud image.

109. The method according to claim 88, wherein the obtaining target data corresponding to the target position point comprises:
in response to determining a reference point in an image, obtaining global positioning information of a target object at a specified position and local positioning information of the reference point relative to the target object, wherein the image is captured by a capturing device of the aircraft, the target object comprises any one of the aircraft's body, the capturing device, or a gimbal carrying the capturing device, the reference point corresponds to the target position point, and the specified position comprises a first specified position and a second specified position different from the first specified position; and
obtaining the target data of the target position point based on the global positioning information and the local positioning information.

110. The method according to claim 109, wherein the obtaining the local positioning information of the reference point relative to the target object comprises:
obtaining a position of the reference point in the image;
obtaining an attitude of the reference point relative to the target object; and
obtaining the local positioning information based on the position of the reference point in the image and the attitude of the reference point relative to the target object.

111. The method according to claim 109, wherein the obtaining the local positioning information of the reference point relative to the target object comprises:
obtaining a position of the reference point in the image;
obtaining an attitude and a relative height of the reference point relative to the target object; and
obtaining the local positioning information based on the position of the reference point in the image and the attitude and the relative height of the reference point relative to the target object.

112. The method according to claim 109, wherein the global positioning information comprises GPS positioning information.

113. The method according to claim 88, wherein the slender obstacle is a slender obstacle having a sag characteristic.

114. The method according to claim 88, wherein the slender obstacle is a power line.

115. The method according to claim 88, wherein the target data comprises semantic information.

116. The method according to claim 88, further comprising:
storing the three-dimensional virtual volume to form a database that can be repeatedly invoked.

117. The method according to claim 116, wherein the database is stored in association with the flight area.

118. The system according to claim 89, further comprising:
issuing a prompt and/or automatically replanning the flight route when at least a portion of the planned flight route passes through the no-fly zone.

119. An aircraft, comprising:
a body;
a power system, disposed on the body, configured to provide flight power for the aircraft; and
the control system according to any one of claims 1-28 and 57-87, disposed on the body.

120. A storage medium for computer-readable storage, **characterized in that**, the storage medium stores one or more programs, the one or more programs being executable by one or more processors to implement the control method according to any one of claims 29-56 and 88-118.
